# EUROPEAN PATENT SPECIFICATION

(11) **EP 0 334 297 B1**
(45) Date of publication and mention of the grant of the patent: **21.09.1994**
(21) Application number: 89105053.6
(22) Date of filing: 21.03.1989
(51) Int. Cl.: H01Q 1/27, H01Q 7/00

(54) **Wrist carried wireless instrument**
Am Handgelenk zu tragendes drahtloses Gerät
Instrument sans fil porté au poignet

(30) Priority: 23.03.1988 JP 68455/88; 15.11.1988 JP 287937/88
(43) Date of publication of application: 27.09.1989
(73) Proprietor: SEIKO EPSON CORPORATION, Shinjuku-ku Tokyo-to (JP)
(72) Inventor: Koyama, Shunsuke, Suwa-shi Nagano-ken (JP)
(74) Representative: Hoffmann, Eckart, Dipl.-Ing.

(56) References cited:
- DE-A- 3 209 345
- DE-U- 8 800 025
- GB-A- 2 201 266
- US-A- 3 032 651
- PATENT ABSTRACTS OF JAPAN, vol. 11, no. 4 (E-468)[2451], 7th January 1987;& JP-A-61181203

## Description

The invention relates to a wrist carried wireless instrument and, more particularly, to the construction of the antenna circuit of such an instrument.

In the prior art, wrist watch type AM radios, wrist watch type FM radios and FM transceivers as a miniature type transceiver and a pocket bell as a miniature type carried receiver are known. With AM radios, a ferrite antenna is provided in the case of the radio. For FM radios, an earphone also serving as a wire antenna is plugged into the case only during receiving. FM transceivers use a rod antenna which is drawn from the case carried on the wrist only during a transmission.

The antenna of a pocket bell is a small-sized loop antenna with an area of several square centimeters to about 10 square centimeters. The frequency is changeable by means of a capacitor.

With the above prior art, if a ferrite antenna is used in a high frequency band such as the VHF band, a large-sized ferrite antenna would have to be provided making it difficult to be carried on the wrist. Therefore, ferrite antennas are used for the AM frequency band only. The wire antenna and the rod antenna when carried on the wrist, may be an obstacle because of their large size. It may thus be difficult to have a wire antenna or a rod antenna in the receiving and transmitting condition, respectively, for a longer time.

On the other hand, as far as the loop antenna for a pocket bell is concerned, its receiving sensitivity may become become inferior when the loop area of the loop antenna is reduced. Therefore, when the loop antenna is made small enough to be inserted into the case of a wrist carried device, the sensitivity may be insufficient, at least in the VHF range having a comparatively long wavelength.

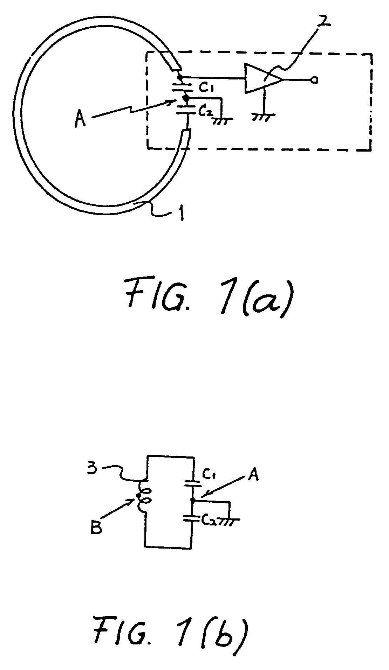

When the wrist carried device is carried on the wrist, a loop antenna may be provided outside of the case. In this case, to obtain a good sensitivity, it is necessary to have as large a loop area as possible, and on the other hand it is necessary for the antenna to have a shape suitable and convenient to be carried on the wrist. As examples of such antennas there are for instance a loop antenna in a form surrounding the wrist as shown in Fig. 1(a) or a loop antenna surrounding the case of the device.

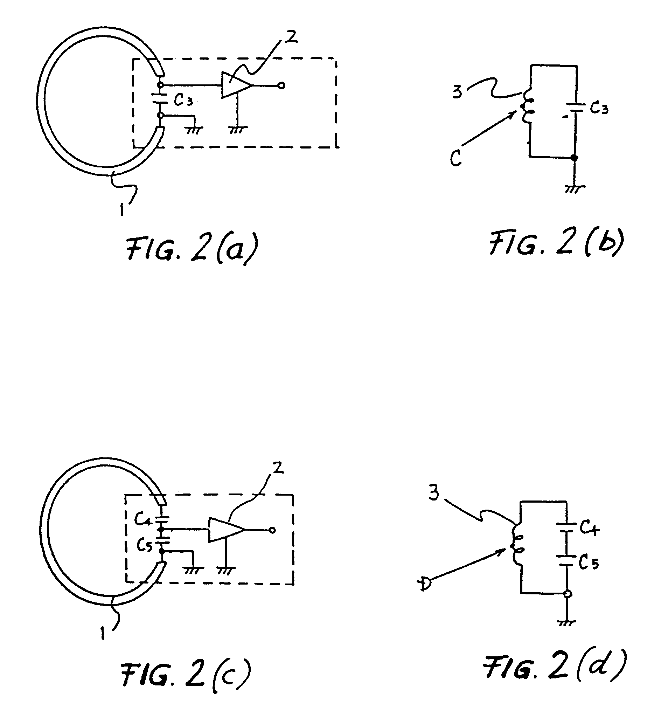

The antenna resonance circuit of the prior art loop antenna has a construction as shown in Figs. 2(a) and 2(c), respectively. The corresponding equivalent circuits are shown in Figs. 2(b) and 2(d), respectively.

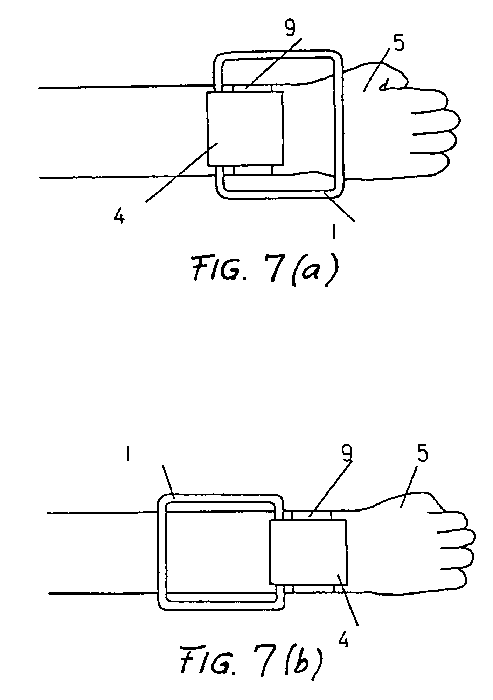

The prior art wrist carried wireless instrument using such an antenna resonance circuit suffers from the disadvantage that, when the instrument is carried on the wrist, if the antenna comes into contact with the wrist or arm, the contacted portion of the human body acts as a load for the tuned loop antenna so that the quality factor Q and the sensitivity are substantially reduced, making this loop antenna unsuitable for a practical use. When the loop antenna 1 (Figs. 7(a) and 7(b)) does not surround the wrist but the case 4 adjacent to the band 9, the quality factor Q and the sensitivity may also be reduced as the loop antenna approaches or contacts the wrist.

The document JP-A-61-181203 discloses wrist watch having a resin wrist strap with a stripe shaped metal embedded therein. The metal acts as a loop antenna connected to an antenna circuit comprising a load coil and a tuning circuit formed inside a case.

The object of the present invention is to remedy the above mentioned drawbacks of the prior art and to provide a wrist carried wireless instrument wherein the quality factor of the antenna resonance circuit is substantially not affected by the wrist or arm carrying the instrument.

According to one aspect of the present invention this object is achieved with a wrist carried wireless instrument comprising a case including electric circuits, a loop antenna formed outside of the case and an antenna resonance circuit, wherein the antenna resonance circuit is formed by said loop antenna and at least two substantially equal capacitors connected in series between the ends of said loop antenna, and the connecting point between the two capacitors is held at a ground electric potential and the capacitors are arranged such that their connecting point is the point where the impedance formed by the capacitors is near to the intermediate value.

According to another aspect of the present invention this object is achieved with a wrist carried wireless instrument comprising a case for supporting wireless instrument circuitry, a loop antenna extending outside of said case and an antenna resonance circuit, wherein the antenna resonance circuit is formed by said loop antenna and at least one capacitor, wherein both ends of said capacitor are connected to balanced input terminals of a front end RF amplifier, respectively.

Specific embodiments of the invention are subject-matter of the dependent claims.

Ways of carrying out the invention are described in detail below with reference to drawings which illustrate only specific embodiments and in which:
- Fig. 1(a): is a diagrammatic circuit diagram of one embodiment of the invention,
- Fig. 1(b): is the equivalent circuit of the antenna resonance circuit of Fig. 1(a),
- Fig. 2(a) and 2(c): are circuit diagrams corresponding to Fig. 1(a) of the prior art,
- Fig. 2(b) and 2(d): are the equivalent circuits to Fig. 2(a) and 2(c), respectively,
- Fig. 3(a) to 3(c): are sectional views showing different relative positions between the prior art loop antenna and the wrist when the wireless instrument is carried on the wrist,
- Fig. 4(a) and 4(b): are sectional views showing relative positions between the loop antenna and the wrist when the wrist carried wireless instrument according to the present invention is carried on the wrist,
- Fig. 5: is a diagrammatic view of a circuit of another embodiment of the present invention,
- Fig. 6: is the corresponding equivalent circuit, and
- Fig. 7(a) and 7(b): show other embodiments of a loop antenna.

Fig. 1(a) is a circuit diagram of the antenna circuit according to one embodiment of the wrist carried wireless instrument of the present invention. The antenna has a form to surround a wrist like the band of a wrist watch. In Fig. 1(a) only an RF amplifier of the receiver is shown for reasons of convenience. Namely, the connecting capacitors of the resonance circuit and the RF amplifier are omitted. The portion of the circuit provided in the case of the instrument is surrounded by dotted lines in Fig. 1(a). Reference numeral 1 designates a loop antenna and reference numeral 2 an RF amplifier. C₁ and C₂ are capacitors. The antenna resonance circuit is formed by the capacitors C₁ and C₂ and the loop antenna 1. Capacitors C₁ and C₂ have substantially the same capacitance and the connecting point A between both capacitors is connected to the ground electric potential of the circuit. In other words, the intermediate point or substantially intermediate point of the impedance comprising the capacitors C₁ and C₂ is grounded.

Fig. 1(b) shows the equivalent circuit of the antenna resonance circuit of Fig. 1(a). Reference numeral 3 designates the equivalent inductor of the antenna. In Fig. 1(b), since the connecting point A of the capacitors C₁ and C₂ is grounded, the portion of the equivalent inductor 3 near to the intermediate point B has substantially the same potential as said connecting point A, namely ground electric potential.

For a better understanding of the embodiments of the present invention the prior art antenna resonance circuit will be explained below. Fig. 2(a) shows the prior art antenna resonance circuit comprised of the loop antenna 1 and a resonance capacitor C₃ connected to the ends of the loop antenna. One end of the loop antenna is grounded. The other end, i.e. the hot side of the resonance capacitor C₃ is connected to the input of an RF amplifier 2. In the equivalent circuit of Fig. 2(b), the portion of the equivalent inductor 3 near to the intermediate point C has a higher electric potential than the ground electric potential. In Fig. 2(c) the resonance capacitor C₃ is divided into two capacitors C₄ and C₅ to reduce the impedance of the grounded point. When the impedance of the RF amplifier is low, the impedance of the connecting point between capacitors C₄ and C₅ is matched with the impedance of the RF amplifier. One end of the loop antenna 1 is grounded as it is in Fig. 1(a). In Fig. 2(d) the equivalent inductor 3 of the loop antenna 1 has at its intermediate point D an electric potential higher than the ground electric potential.

The difference of the properties between the resonance circuit according to the present invention, where the connecting point between capacitors C₁ and C₂ is grounded and the resonance circuit of the prior art, where one end of the loop antenna is grounded will be explained next.

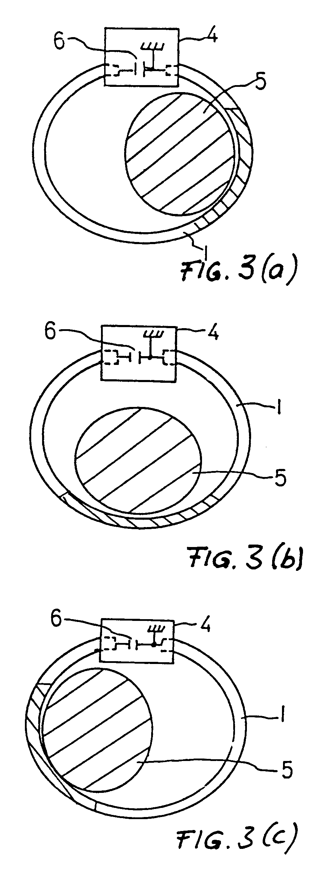

Figs. 3(a), 3(b) and 3(c) are sectional views of the prior art instrument carried on the wrist. Reference numeral 1 designates the loop antenna, reference numeral 5 the wrist and reference numeral 4 a case of the wrist carried wireless instrument. Reference numeral 6 designates a resonance capacitor. Fig. 3(a), 3(b) and 3(c) show different conditions of the relative position between the loop antenna 1 and the wrist. In each case the hatched portion of the loop antenna 1 is the portion in contact with or nearest to the wrist.

With the prior art construction of the resonance circuit shown in Figs. 3(a) to (c), the antenna resonance circuit is largely affected by the relative position between the wrist 5 and the loop antenna 1. In Fig. 3(a), since the contact portion between the wrist 5 and the loop antenna 1 is close to the grounded end of the loop antenna 1, the quality factor Q of the antenna resonance circuit is not much reduced so that the sensitivity does not become inferior. In Fig. 3(b) however, the contact portion between the wrist 5 and the loop antenna 1 is in the intermediate portion of the loop antenna 1, so that the quality factor Q of the antenna resonance circuit is fairly reduced. Further, in Fig. 3(c), since the higher electric potential side of the loop antenna 1 is brought into contact with the wrist 5, the quality factor Q is substantially reduced to an extent making a practical use impossible.

Therefore, when the prior art antenna resonance circuit is used, the receiving sensitivity greatly depends on the condition of how the instrument is carried on the wrist. In the worst case, the antenna resonance circuit cannot fulfil its function.

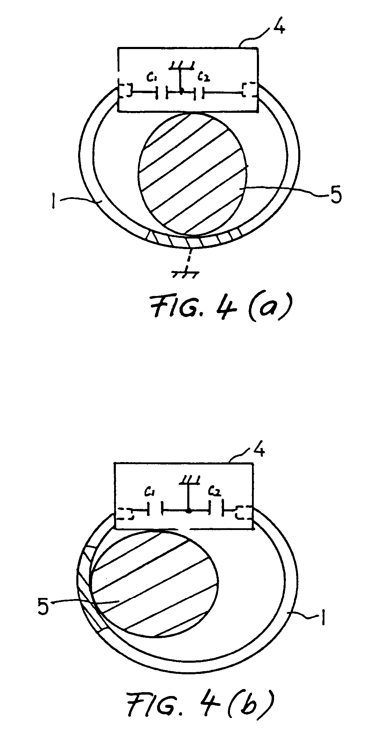

On the other hand, Figs. 4(a) and 4(b) show sectional views of the wireless instrument according to an embodiment of the present invention carried on the wrist in different positions. In this case, the intermediate portion of the antenna resonance circuit is grounded. Fig. 4(a) shows the usual carried condition and Fig. 4(b) shows the condition where the loop antenna 1 is shifted in one direction relative to the wrist. As apparent from Fig. 4(a), it is substantially the intermediate portion of the loop antenna 1 which is brought into contact with or is close to the loop antenna 1. In this case the quality factor Q of the resonance circuit is substantially unaffected. Since the relative position shown in Fig. 4(a) can be regarded as the normal position, it can be said that if the loop antenna 1 of the present invention is used, there is almost no deterioration of the sensitivity. This applies in the same way to loop antenna constructions as shown in Figs. 7(a) and 7(b).

Further, as shown in Fig. 4(b), in case the wrist 5 is brought into contact with one side of the loop antenna 1 in an inclined manner, the other side of the antenna still operates effectively, so that the quality factor Q is nearly not reduced and there is no problem for practical use.

On the other hand, in the prior art circuit construction shown in Figs. 2(a) to 2(d) and Figs. 3(a) to 3(c), the hot side of the resonance circuit is likely to be affected by the load. Even if the loop antenna is insulated by an outer cover, the quality factor Q is reduced in the same way. Furthermore, if the antenna is provided outside of the case, even if the conductive member of the antenna is provided in the band, the wrist is not fully surrounded by the antenna as shown in Figs. 7(a) and 7(b). In case the loop antenna is surrounded by the wrist, the above description concerning the affects of the wrist also applies to the construction of Figs. 2(a) to 2(d) and Figs. 7(a) to 7(c).

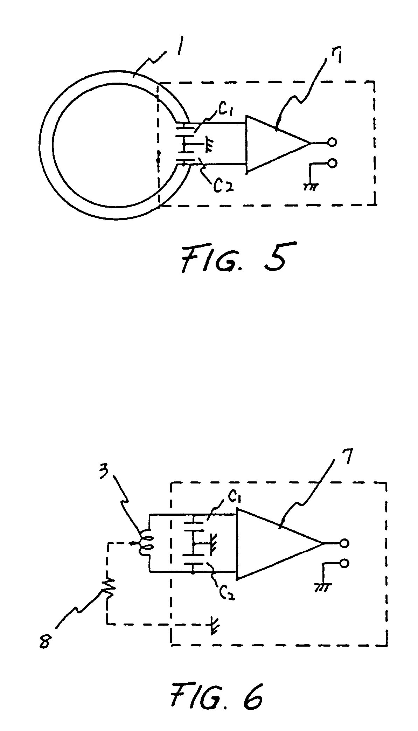

Fig. 5 shows another embodiment of the present invention, where an amplifying circuit having balanced input terminals as a front-end RF amplifier (for example a differential amplifier) is used.

The voltage induced in the loop antenna 1 is drawn from both ends of the antenna and is applied to the balanced input terminals of the amplifier. The connecting point between the resonance capacitors C₁ and C₂ is grounded, and with respect to the RF amplifier, the loop antenna 1 can be regarded as a power source delivering a balanced output signal. Therefore, the specific feature of the embodiment of Fig. 5 is that a front-end circuit is formed by the loop antenna 1 which acts as a power source of a balanced output signal and an amplifying circuit having balanced input terminals.

Fig. 6 is the equivalent circuit of the balanced circuit of Fig. 5. Reference numeral 3 designates the antenna equivalent inductor. 8 is an equivalent load resistor formed by the human body.

In Fig. 6 the load resistor 8 is connected between the ground of the circuit and the equivalent inductor because the largest contacting portion between the human body and the circuit is regarded as the ground of the circuit and the human body can be regarded as a load between the antenna and the ground, namely the operation of the antenna is affected by the human body, when the human body approaches a portion of the antenna or when the instrument is carried on the wrist.

In this case, when the instrument is carried on the wrist, it is advantageous that the antenna and the input side of the amplifying circuit are operated in a balanced manner relative to the approach of the antenna to the human body, so that the signal current flowing from the antenna to the amplifying circuit does not flow into the equivalent load resistor 8. In fact, it is difficult to indicate the entire load of the human body by only one equivalent resistor 8. But this resistor can be regarded as the main load of the human body to the antenna circuit. In Fig. 5 the portion of the antenna which is normally brought into contact with the wrist substantially has the ground electric potential, so that there is little influence from the human body to the antenna only and at the same time, with respect to an approach of other parts of the human body to the antenna, it is possible to reduce the load applied to the antenna by the balanced driving of the antenna 1 and the RE amplifier 7. Figs. 5 and 6 show one embodiment of the present invention wherein the intermediate electric potential of the resonance capacitors C₁ and C₂ is equal to the ground electric potential. However, since the antenna and the RF amplifier are balanced circuits, even if the intermediate electric potential is not equal to the ground electric potential, the loop antenna is not likely to be affected by the entire human body load as shown in Fig. 6. Therefore, if the intermediate electric potential of the resonance capacitors C₁ and C₂ is not equal to the ground electric potential, it is also possible to provide a wrist carried wireless instrument which prevents deterioration of quality.

As mentioned above, in the wrist carried wireless instrument, the effect of the load exerted by the wrist depends on whether the electric potential of the intermediate portion of the loop antenna near to or contacted by the wrist is high or low. When the electric potential of the contacted portion is high, the quality factor Q of the antenna resonance circuit is greatly reduced. This reduction of the quality factor Q is caused by a reduction of the gain of the antenna and results in a reduced sensitivity. On the other hand, the present invention has the advantage that since the portion of the loop antenna normally contacted by or nearest to the wrist has the ground electric potential of the circuit, the antenna resonance circuit is not affected by the wrist. Further, even if the antenna resonance circuit is attached to or brought into contact with another portion of the human body, it is not affected in the same way.

At the present time, it is generally said that the gain of the resonance type small loop antenna used for a pocket bell or the like is approximately that of a half wave dipole reduced by 30 dB. With a loop antenna carried on the wrist, if the antenna is formed outside of the case, the opening area of the antenna is larger than that of the pocket-in type antenna. Therefore, when the wrist carried device is not in its carried condition, an excellent sensitivity is likely to be obtained. However, in the prior art system where the electric potential of one end of the loop antenna is equal to the ground electric potential at the time of carrying the device on the wrist, the gain is reduced by 10dB or more and the output impedance of the antenna resonance circuit is reduced greater than that of the present invention. Furthermore, it may be difficult to match the antenna resonance circuit with the RF amplifier. When a part of the human body other than the wrist carrying the device approaches the antenna or the circuit, the same deterioration of the properties is likely to occur.

On the other hand, according to the present invention, the wrist carried wireless instrument may be driven in a balanced manner in a simple circuit construction, and as a result, it is possible to reduce the deterioration of the properties which may by caused by parts of the human body other than the wrist.

Heretofore it was impossible to obtain with an antenna having a convenient form a gain in practical use of for example approximately 30 dB less than that of a half wave dipole and, thus, it was difficult to provide a wrist carried wireless instrument suitable for practical use. According to the present invention it is possible to greatly reduce the influence of the wrist by a simple circuit construction and to provide a construction for reducing the influence of parts of the human body other than the wrist. As a result, the loop antenna exhibits a gain of a practical level, thereby making it possible to obtain a wrist carried wireless instrument of a high sensitivity.

## Claims

1. A wrist carried wireless instrument comprising a case including electric circuits, a loop antenna (1) formed outside of the case and an antenna resonance circuit,
**characterized** in that the antenna resonance circuit is formed by said loop antenna (1) and at least two substantially equal capacitors (C₁, C₂) connected in series between the ends of said loop antenna (1), and that the connecting point (A) between the two capacitors (C₁, C₂) is held at a ground electric potential and the capacitors (C₁, C₂) are arranged such that their connecting point (A) is the point where the impedance formed by the capacitors is near to the intermediate value.

2. The instrument as claimed in claim 1, wherein both ends of the at least two capacitors (C₁, C₂) are connected to balanced input terminals of a front-end RF amplifier (7).

3. A wrist carried wireless instrument comprising a case for supporting wireless instrument circuitry, a loop antenna (1) extending outside of said case and an antenna resonance circuit,
**characterized** in that the antenna resonance circuit is formed by said loop antenna and at least one capacitor, wherein both ends of said capacitor are connected to balanced input terminals of a front end RF amplifier (7), respectively.

4. The instrument as claimed in claim 3, wherein the antenna resonance circuit is formed by said loop antenna (1) and two capacitors (C₁, C₂) connected in series, the two ends of the series connection of said two capacitors being connected to the balanced input terminals of said RF amplifier (7).

5. The instrument as claimed in any of the preceding claims, wherein the loop antenna (1) has a wrist surrounding form.

## Patentansprüche

1. Am Handgelenk zu tragendes Funkgerät, umfassend ein elektrische Schaltungen enthaltendes Gehäuse, eine außerhalb des Gehäuses gebildete Schleifenantenne (1) und eine Antennenresonanzschaltung,
**dadurch gekennzeichnet,** daß die Antennenresonanzschaltung von der Schleifenantenne (1) und wenigstens zwei im wesentlichen gleichen, in Reihenschaltung zwischen den Enden der Schleifenantenne (1) angeschlossenen Kapazitäten (C₁, C₂) gebildet ist und der Verbindungspunkt (A) zwischen den beiden Kapazitäten (C₁, C₂) auf einem elektrischen Erdpotential gehalten wird und die Kapazitäten (C₁, C₂) so angeordnet sind, daß ihr Verbindungspunkt (A) der Punkt ist, wo die von den Kapazitäten gebildete Impedanz nahe dem Zwischenwert liegt.

2. Gerät nach Anspruch 1, bei dem beide Enden der wenigstens zwei Kapazitäten (C₁, C₂) mit symmetrischen Eingangsanschlüssen eines Eingangsstufen-RF-Verstärkers (7) verbunden sind.

3. Am Handgelenk zu tragendes Funkgerät, umfassend ein Gehäuse zur Halterung einer Schaltungsanordnung für das Funkgerät, eine sich außerhalb des Gehäuses erstreckende Schleifenantenne (1) und einen Antennenresonanzschaltung,
**dadurch gekennzeichnet,** daß die Antennenresonanzschaltung von der Schleifenantenne und wenigstens einer Kapazität gebildet ist, wobei beide Enden der Kapazität jeweils mit symmetrischen Eingangsanschlüssen eines Eingangsstufen-RF-Verstärkers (7) verbunden sind.

4. Gerät nach Anspruch 3, bei dem die Antennenresonanzschaltung von der Schleifenantenne (1) und zwei in Reihe geschalteten Kapazitäten (C₁, C₂) gebildet ist, wobei die beiden Enden der Reihenschaltung der beiden Kapazitäten mit den symmetrischen Eingangsanschlüssen des RF-Verstärkers (7) verbunden sind.

5. Gerät nach einem der vorhergehenden Ansprüche, **dadurch gekennzeichnet,** daß die Schleifenantenne (1) eine das Handgelenk umgebende Form aufweist.

## Revendications

1. Un instrument sans fil porté au poignet comprenant un boîtier qui contient des circuits électriques, une antenne cadre (1) formée à l'extérieur du boîtier et un circuit résonnant d'antenne,
**caractérisé** en ce que le circuit résonnant d'antenne est formé par l'antenne cadre (1) et par au moins deux condensateurs (C₁, C₂) ayant des valeurs pratiquement égales, qui sont connectés en série entre les extrémités de l'antenne cadre (1), et en ce que le point de connexion (A) entre les deux condensateurs (C₁, C₂) est maintenu à un potentiel électrique de masse, et les condensateurs (C₁, C₂) sont choisis de façon que leur point de connexion (A) soit le point auquel l'impédance formée par les condensateurs est proche de la valeur intermédiaire.

2. L'instrument selon la revendication 1, dans lequel les deux extrémités des deux condensateurs (C₁, C₂) au moins, sont connectées à des bornes d'entrée symétriques d'un amplificateur RF d'étage d'entrée (7).

3. Un instrument sans fil porté au poignet comprenant un boîtier pour des circuits d'instrument sans fil, une antenne cadre (1) s'étendant à l'extérieur du boîtier et un circuit résonnant d'antenne,
**caractérisé** en ce que le circuit résonnant d'antenne est formé par l'antenne cadre et par au moins un condensateur, et les deux armatures de ce condensateur sont respectivement connectées à des bornes d'entrée symétriques d'un amplificateur RF d'étage d'entrée (7).

4. L'instrument selon la revendication 3, dans lequel le circuit résonnant d'antenne est formé par l'antenne cadre (1) et deux condensateurs (C₁, C₂) connectés en série, les deux extrémités de la connexion série des deux condensateurs étant connectées aux bornes d'entrée symétriques de l'amplificateur RF (7).

5. L'instrument selon l'une quelconque des revendications précédentes, dans lequel l'antenne cadre (1) a une forme entourant un poignet.
